## Europäisches Patentamt

### European Patent Office

### Office européen des brevets

(19)

(11) Publication number : **0 396 294 B1**

(12)

# EUROPEAN PATENT SPECIFICATION

(45) Date of publication of patent specification :
**24.06.92 Bulletin 92/26**

(51) Int. Cl.$^5$ : **F24H 8/00**

(21) Application number : **90304330.5**

(22) Date of filing : **23.04.90**

(54) **Gas fired appliances and installations incorporating such appliances.**

(30) Priority : **04.05.89 GB 8910196**

(43) Date of publication of application :
**07.11.90 Bulletin 90/45**

(45) Publication of the grant of the patent :
**24.06.92 Bulletin 92/26**

(84) Designated Contracting States :
**BE DE FR NL**

(56) References cited :
**US-A- 4 676 199**

(73) Proprietor : **British Gas plc**
**Rivermill House, 152 Grosvenor Road**
**London SW1V 3JL (GB)**

(72) Inventor : **Pride, Russell Desmond**
**9 Raymead Way, Fetcham**
**Leatherhead, Surrey KT22 2LY (GB)**

EP 0 396 294 B1

## Description

The present invention relates to gas-fired appliances and, more particularly, to installations incorporating gas-fired appliances which produce condensate within the installation.

Liquid condensate is known to form in appliance heat exchangers and in flues or flue conduits into which combustion products are discharged from high efficiency gas-fired appliances having an efficiency of about 88% or more or where the flue gas inlet temperature is about 60 degrees Centigrade or less.

Such condensation should not be allowed to collect in the flue but should be expelled, for example, at a terminal. It will, however, be appreciated that the liquid condensate may cause nuisance if allowed to drip from a flue terminal, particularly in installations located above the ground floor. Moreover, removal of the condensate from the terminal to a drain may be inconvenient and relatively expensive, as see US-A-4676199.

Where substantial amounts of condensate are produced, usually from high efficiency appliances of more than a few kilo-watt rating, it may be preferable to return the condensate back to the appliance for disposal. It has previously been proposed that such returned condensate may be disposed down a drain. The condensate may be produced at rates, for example, in the order of 200cc per hour.

The development of small high pressure fans such as toroidal fans has allowed high efficiency appliances to operate with so-called "miniature" flues. At the present time, the internal diameter of these miniature flues when used with domestic appliances, eg. of up to 20kw output, are of the order of 30mm or less, for example 22mm. It is envisaged that with the development of more powerful fans, the miniature flue may be somewhat greater than 30mm when used with commercial appliances. Unlike natural draught flues, miniature flues assisted by high pressure fans can operate not only with vertically disposed sections of flue but also with approximately horizontally disposed sections of flue. The miniature flues are relatively easy to install and are less obtrusive. A horizontal section or run of the flue may, for example, be routed around part of the skirting board.

An object of the invention is to provide means for removing the condensate from the flue conduit in the form of vapour or mist.

From one aspect, the invention provides an installation comprising a gas-fired appliance having an outlet for product of combustion formed by the appliance, a flue conduit to which the outlet is connected, and fan means associated with the flue conduit, characterised in that the appliance further comprises an ultrasonic nebulizer means which collects condensate formed in the flue conduit and is operable to produce from collected condensate, a vapour mist which the fan means, when operating, can disperse and move through and out of the flue conduit.

From a further aspect, the invention provides a gas-fired appliance having an outlet for products of combustion resulting from the operation of the appliance, characterised in that the appliance further comprises an ultrasonic nebulizer means for collecting condensate resulting from the operation of the appliance and being operable to produce a vapour mist from collected condensate.

Thus, liquid condensate is converted into vapour mist by ultrasonic nebulization. Applicants have found that the energy requirement for this is considerably less than that required to vaporise the condensate by heating and supplying the full latent heat of vaporisation.

The nebulizer means may be connected to the flue conduit outside of the appliance casing, for example, at or adjacent the flue terminal or, alternatively, at some other location intermediate the appliance and the flue terminal.

However, preferably, the nebulizer means is connected to the flue conduit and is located within the casing of the appliance. Such an arrangement is applicable, for example, to a fan powered miniature flue system which may be part of a room-sealed balanced-flue appliance installation, wherein air for combustion is supplied from outside a building at a point near to which the products of combustion discharge, with the appliance being sealed completely from the room in which it is installed. In such a case, with the nebulizer within the appliance, the flue conduit may be arranged, such as by being inclined back towards the appliance, so as to ensure that condensate returns to the nebulizer.

The nebulizer means may, conveniently, include switch means, such as a float switch, responsive to upper and lower levels of collected condensate to switch the nebulizer to operative or inoperative modes, respectively.

The fan may be incorporated in the installation either upstream or downstream of the appliance to provide a forced draught or an induced draught, respectively, through the appliance.

The present invention will now be described, by way of example only, with reference to the accompanying drawings, in which:

Figure 1 shows in schematic form one embodiment of an installation according to the invention, and

Figure 2 shows in schematic form an alternative embodiment of an installation.

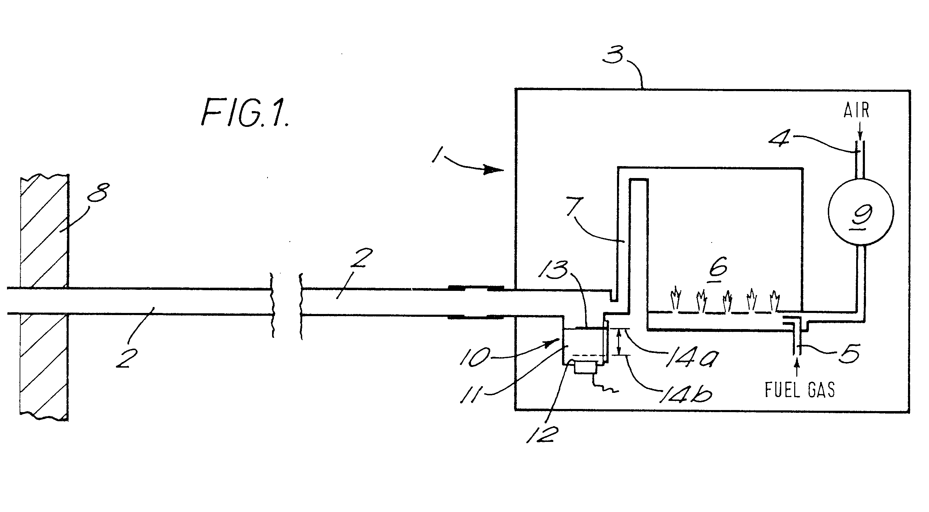

Referring to Figure 1, an installation comprises a gas-fired appliance 1 connected to a flue conduit 2 for the products of combustion formed by the appliance. Within the appliance, that is within an outer casing 3 of the appliance, there is an inlet 4 for combustion air, a fuel gas inlet 5, a combustion zone 6 where the fuel gas is burned and an outlet 7 from the combustion zone 6 for the products of combustion. The outlet 7 is connected to the flue conduit 2 which extends through and terminates on the external side of an outside wall 8.

In this embodiment, an electrically powered fan 9 is located in the appliance 1 to provide a forced draught of combustion air into the appliance and move the combustion products into and through the flue conduit 2. The fan 9 also assists in removing condensate from the installation as will be described below.

Also within the appliance is an electrically powered ultrasonic nebulizer 10 connected to both the appliance end of the flue conduit 2 and to the outlet 7 from the combustion zone 6. The nebulizer includes a container 11 to collect condensate formed in the flue conduit and, at the base of the container, an electrically operated ultrasonic transducer 12 which is operable to produce a fine vapour mist from the collected condensate. A float switch 13 is provided in association with the container 11 and is responsive to upper and lower levels 14a,14b respectively of collected condensate to switch the nebulizer 10 to an operative vapour forming mode or an inoperative mode, respectively.

The flue conduit 2 may slope downwardly in a direction back towards the appliance to facilitate the flow of condensate into the container.

When the appliance 1 is operating and combustion products are being produced, condensate collects in the container 11 and rises to predetermined upper level 14a whereat the float switch actuates the ultrasonic nebulizer 10 whereby vapour mist is formed from the condensate and is dispersed and moved through the flue conduit 2 to the terminal end of the conduit by the forced draught from the fan 9. When the level of the collected condensate falls to predetermined lower level 14b the float switch switches the nebulizer off.

Instead of being located within the appliance, the ultrasonic nebulizer and/or fan may be located downstream of the appliance.

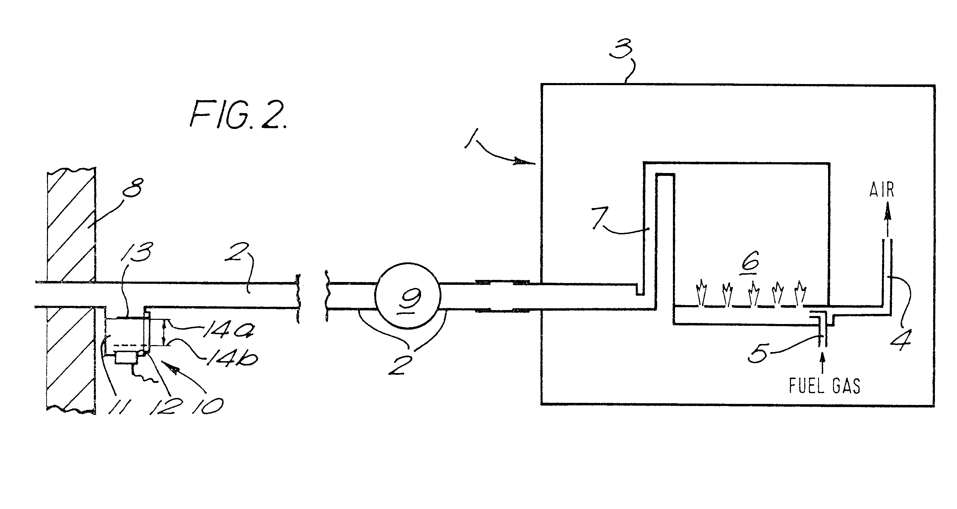

For example, as shown in Figure 2, the nebulizer 10 may be connected to the flue conduit 2 close to the interior of the outside wall 8 whilst the fan 9 may be connected to the flue conduit at a point outside of the appliance casing 3. The fan would then operate to induce combustion air into the appliance and combustion products from the combustion zone 6 into the flue conduit. As regards the nebulizer, the fan would act as a forced draught fan since the fan is still upstream of the nebulizer.

In Figure 2, where the nebulizer 10 is located downstream of the appliance, the run of the flue conduit from the appliance to the nebulizer, may be sloped downwardly towards the nebulizer to assist the flow of condensate into the container 11.

Whilst particular embodiments of the invention have been described above, it will be appreciated that various modifications may be made. For example, the Figure 1 embodiment may be modified by locating the fan downstream of the appliance casing in the flue conduit line, and the Figure 2 embodiment may be modified by locating the fan inside the appliance casing, either upstream or downstream of the combustion zone.

## Claims

1. Installation comprising a gas-fired appliance (1) having an outlet (7) for products of combustion formed by the appliance, a flue conduit (2) to which the outlet is connected, and fan means (9) associated with the flue conduit, characterised in that the appliance further comprises an ultrasonic nebulizer means (10) which collects condensate formed in the flue conduit (12) and is operable to produce from collected condensate a vapour mist which the fan means (9), when operating, can disperse and move through and out of the flue conduit.

2. An installation as claimed in claim 1, in which the nebulizer means (10) is connected to the flue conduit (2) and is located outside of the appliance casing (3).

3. An installation as claimed in claim 1, in which the nebulizer means (10) is connected to the flue conduit (12) and is located within the casing (3) of the appliance.

4. An installation as claimed in any of the preceding claims, in which the nebulizer means (10) includes a float switch (13) responsive to upper and lower levels of collected condensate to switch the nebulizer means to operative or inoperative modes, respectively.

5. A gas-fired appliance having an outlet (7) for products of combustion resulting from the operation of the appliance, characterised in that the appliance further comprises an ultrasonic nebulizer means (10) for collecting condensate resulting from the operation of the appliance and being operable to produce a vapour mist from the collected condensate.

6. An appliance as claimed in claim 5, in which the nebulizer means (10) includes a float switch (13) responsive to upper and lower levels of collected condensate to switch the nebulizer means to operative or inoperative modes, respectively.

7. An appliance as claimed in claim 5 or claim 6, further comprising a fan means (9) associated with the outlet (7) and located within the casing (3) of the appliance for dispersing and moving the vapour mist through the outlet (7).

**Patentansprüche**

1. Installation mit einem gasbeheizten Gerät mit einem Auslaß (7) für Verbrennungsprodukte, die durch die Einrichtung gebildet werden, einer Rauchabzugsleitung (2), mit welcher der Auslaß verbunden ist, und einer der Rauchabzugsleitung zugeordneten Gebläseeinrichtung (9), dadurch gekennzeichnet, daß das Gerät eine Ultraschall-Vernebelungseinrichtung (10) aufweist, die in der Rauchabzugsleitung (2) gebildetes Kondensat sammelt und betätigbar ist, um aus dem gesammelten Kondensat einen Dampfnebel zu erzeugen, den die Gebläseeinrichtung (9), wenn in Betrieb befindlich, dispergieren und durch die sowie aus der Rauchabzugsleitung bewegen kann.

2. Installation nach Anspruch 1, bei der die Vernebelungseinrichtung (10) mit der Rauchabzugsleitung (2) verbunden und außerhalb des Gerätgehäuses angeordnet ist.

3. Installation nach Anspruch 1, bei der die Vernebelungseinrichtung (10) mit der Rauchabzugsleitung (2) verbunden und innerhalb des Gehäuses (3) des Gerätes angeordnet ist.

4. Installation nach einem der vorangehenden Ansprüche, bei der die Vernebelungseinrichtung (10) einen Schwimmerschalter (13) enthält, der auf obere und untere Pegel des gesammelten Kondensats anspricht, um die Vernebelungseinrichtung ein- bzw. auszuschalten.

5. Gasbeheiztes Gerät mit einem Auslaß (7) für Verbrennungsprodukte, die sich beim Betrieb des Gerätes ergeben, dadurch gekennzeichnet, daß das Gerät ferner eine Ultraschall-Vernebelungseinrichtung (10) zum Sammeln von sich aus dem Betrieb des Gerätes ergebendem Kondensat und, bei Betätigung, zum Erzeugen eines Dampfnebels aus dem gesammelten Kondensat aufweist.

6. Gerät nach Anspruch 5, bei dem die Vernebelungseinrichtung (10) einen Schwimmerschalter (13) enthält, der auf obere und untere Pegel des gesammelten Kondensats anspricht, um die Vernebelungseinrichtung ein- bzw. auszuschalten.

7. Gerät nach Anspruch 5 oder 6, gekennzeichnet durch eine Gebläseeinrichtung (9), die dem Auslaß (7) zugeordnet und zum Dispergieren und Bewegen des Dampfnebels durch den Auslaß (7) hindurch innerhalb des Gehäuses (3) des Gerätes angeordnet ist.

**Revendications**

1. Installation comportant un appareil (1) à chauffe au gaz ayant une sortie (7) pour des produits de combustion formés par l'appareil, un conduit (2) de fumées auquel la sortie est raccordée, et un moyen à ventilateur (9) associé au conduit de fumées, caractérisée en ce que l'appareil comporte en outre un moyen à nébulisateur ultrasonique (10) qui collecte un condensat formé dans le conduit de fumées (12) et qui peut être mis en oeuvre pour produire à partir du condensat collecté un brouillard de vapeur que le moyen à ventilateur (9), lorsqu'il est en marche, peut disperser et déplacer dans le conduit de fumées et le faire sortir de celui-ci.

2. Installation selon la revendication 1, dans laquelle le moyen à nébulisateur (10) est raccordé au conduit de fumées (2) et est placé à l'extérieur de l'enceinte (3) de l'appareil.

3. Installation selon la revendication 1, dans laquelle le moyen à nébulisateur (10) est raccordé au conduit de fumées (12) et est placé à l'intérieur de l'enceinte (3) de l'appareil.

4. Installation selon l'une quelconque des revendications précédentes, dans laquelle le moyen à nébulisateur (10) comprend un interrupteur (13) à flotteur qui réagit à des niveaux haut et bas du condensat collecté pour commuter le moyen à nébulisateur entre des modes en marche et à l'arrêt, respectivement.

5. Appareil à chauffe au gaz ayant une sortie (7) pour des produits de combustion résultant du fonctionnement de l'appareil, caractérisé en ce que l'appareil comporte en outre un moyen à nébulisateur ultrasonique (10) destiné à collecter un condensat résultant du fonctionnement de l'appareil et pouvant être mis en oeuvre pour produire un brouillard de vapeur à partir du condensat collecté.

6. Appareil selon la revendication 5, dans lequel le moyen à nébulisateur (10) comprend un interrupteur (13) à flotteur qui réagit à des niveaux haut et bas du condensat collecté pour commuter le moyen à nébulisateur entre des modes en marche et à l'arrêt, respectivement.

7. Appareil selon la revendication 5 ou la revendication 6, comportant en outre un moyen à ventilateur (9) associé à la sortie (7) et placé à l'intérieur de l'enceinte (3) de l'appareil pour disperser et déplacer le brouillard de vapeur à travers la sortie (7).

EP 0 396 294 B1

*FIG.1.*

AIR

FUEL GAS

FIG.2.

AIR

FUEL GAS

EP 0 396 294 B1